# EUROPÄISCHE PATENTSCHRIFT

(11) **EP 1 639 686 B1**
(45) Veröffentlichungstag und Bekanntmachung des Hinweises auf die Patenterteilung: **28.11.2007**
(21) Anmeldenummer: 04740268.0
(22) Anmeldetag: 24.06.2004
(51) Int. Cl.: H02K 3/50

(54) **ELEKTROMOTOR FÜR EINEN ANTRIEB EINES FAHRZEUGS, INSBESONDERE BAHNANTRIEB, SOWIE EIN ANTRIEB MIT EINEM SOLCHEN ELEKTROMOTOR**
ELECTRIC MOTOR FOR A DRIVE UNIT OF A VEHICLE, ESPECIALLY RAILROAD DRIVE UNIT, AND DRIVE UNIT COMPRISING SUCH AN ELECTRIC MOTOR
MOTEUR ELECTRIQUE POUR SYSTEME D'ENTRAINEMENT D'UN VEHICULE, EN PARTICULIER D'UN VEHICULE FERROVIAIRE, ET SYSTEME D'ENTRAINEMENT EQUIPE D'UN TEL MOTEUR ELECTRIQUE

(30) Priorität: 01.07.2003 DE 10329678
(43) Veröffentlichungstag der Anmeldung: 29.03.2006
(73) Patentinhaber: SIEMENS AKTIENGESELLSCHAFT, 80333 München (DE)
(72) Erfinder: MÄURER, Alexander, 90408 Nürnberg (DE); MAUL, Gerhard, 90411 Nürnberg (DE); KLAUSSNER, Bernhard, 90408 Nürnberg (DE)
(86) Internationale Anmeldenummer: PCT/EP2004/006855
(87) Internationale Veröffentlichungsnummer: WO 2005/004309

(56) Entgegenhaltungen:
- EP-A- 0 684 682
- EP-A- 1 237 254
- DE-A- 1 613 297
- DE-A- 19 748 529
- DE-A- 19 943 446
- PATENT ABSTRACTS OF JAPAN Bd. 0051, Nr. 49 (E-075), 19. September 1981 (1981-09-19) -& JP 56 083237 A (HITACHI LTD), 7. Juli 1981 (1981-07-07)
- PATENT ABSTRACTS OF JAPAN Bd. 0071, Nr. 36 (E-181), 14. Juni 1983 (1983-06-14) -& JP 58 049058 A (NITSUKISOU KK; others: 01), 23. März 1983 (1983-03-23)

## Beschreibung

Die Erfindung betrifft einen Elektromotor für einen Antrieb eines Fahrzeugs, insbesondere Bahnantriebe.

Elektrische Bahnantriebe sind allgemein bekannt. Sie weisen zumindest einen Elektromotor als Antriebsmotor auf, der aus einem Läufer und einem Ständer gebildet ist. Der Ständer besteht aus einem Blechpaket mit einer Bohrung, in der über ihren gesamten Innenumfang verteilt Nuten ausgebildet sind. In den Nuten ist eine Wicklung eingelegt, die stirnseitig aus dem Blechpaket herausragt und den Wickelkopf der Wicklung bildet. Ist der Elektromotor durchzugbelüftet, so werden Ständer und Läufer direkt durch Kühlluft gekühlt. Die Ständerwicklung wird dabei von Kühlluft umströmt.

Derartige durchzugbelüftete Elektromotoren besitzen ein hohes Leistungsgewicht und werden mit Formspulenwicklungen aus Flachdraht ausgeführt. Solche Elektromotoren können für die Wärmeklasse 200 hergestellt werden, d. h. der Motor kann mit einer Übertemperatur (Temperaturdifferenz) von 200 Kelvin gegenüber der umgebenden Luft betrieben werden.

Der Nachteil der bekannten Motoren mit Formspulenwicklungen aus Flachdraht besteht darin, dass diese relativ teuer in der Herstellung sind.

Die DE 199 43 446 A1 als nächstliegender Stand der Technik offenbart einen Elektromotor für einen Antrieb eines Fahrzeugs, mit einem Läufer sowie einem aus einem Blechpaket gebildeten Ständer, der mit Nuten versehen ist, in denen mindestens eine Wicklung angeordnet ist, wobei der Elektromotor von Kühlluft durchströmt wird,
und wobei außerdem die Wickelköpfe zum Schutz gegen äußere Einflüsse in ein temperaturbeständiges elastisches Material eingebettet sind.

Die Aufgabe der Erfindung besteht darin, einen Elektromotor für einen Antrieb sowie einen Antrieb mit einem solchen Elektromotor vorzuschlagen, der kostengünstiger herstellbar ist und der Wärmeklasse 200 genügt.

Die Lösung dieser Aufgabe ist für den Elektromotor durch die im Anspruch 1 angegebenen Merkmale gegeben. Die kennzeichnenden Merkmale der Unteransprüche gestalten den Elektromotor in vorteilhafter Weise weiter aus.

Die Lösung sieht bezogen auf den Elektromotor vor, dass die Wicklung aus mit einer Isolierung versehenen Runddrähten gebildet ist und dass der Elektromotor zumindest den Anforderungen der Wärmeklasse 200 genügt, indem er mit einer Temperaturdifferenz von 200 K gegenüber der umgebenden Luft betrieben werden kann, und dass die Nuten eine Nutseitenisolierung aus einem glimmerhaltigen Werkstoff aufweisen und dass die Isolierung der Runddrähte aus einem oder mehreren aufextrudierten Hochtemperaturthermoplaste besteht und dass die Kühlluft im Ständer vorgesehene Kühlbohrungen durchströmt. Kosteneinsparungen ergeben sich bei diesem Elektromotor aus der Verwendung von Spulen aus Runddrähten, wobei dann aber die Wickelköpfe zwingend in ein temperaturbeständiges elastisches Material eingebettet sein müssen, um insbesondere den Anforderungen der Wärmeklasse 200 zu genügen.

Vorteilhafterweise ist das temperaturbeständige elastische Material ein Silikonkautschuk.

Zur Verbesserung der Kühlung ist bevorzugt vorgesehen, dass die Kühlluft die vom Material geschützten Wickelköpfe umströmt.

Die Erfindung wird nachfolgend anhand einer Zeichnung beschrieben. Es zeigen:
- Fig. 1: den Ständer des Elektromotors in einer dreidimensionalen Darstellung mit Blick auf eine Stirnseite,
- Fig. 2: einen Ausschnitt des in ein temperaturbeständiges elastisches Material eingebetteten Wickelkopfs gemäß Fig. 1 in einer vergrößerten Darstellung und
- Fig. 3: einen Querschnitt durch eine Nut des Ständers in einer schematischen Darstellung.

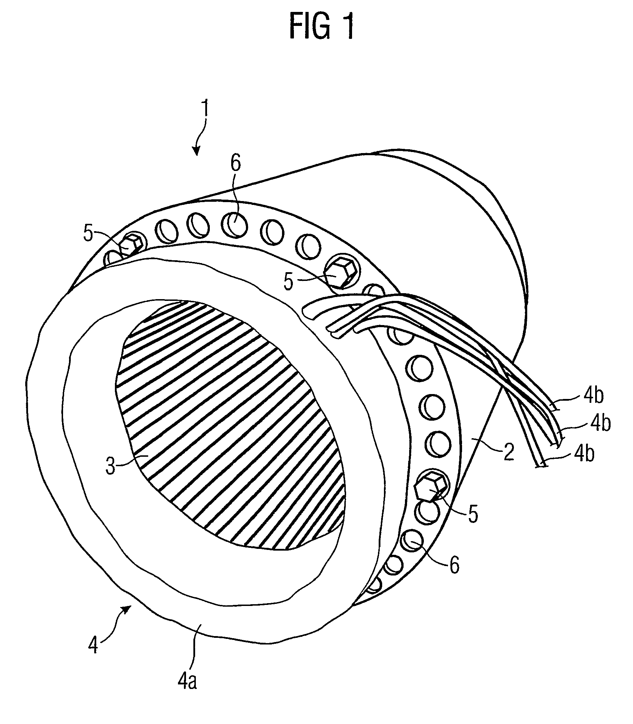

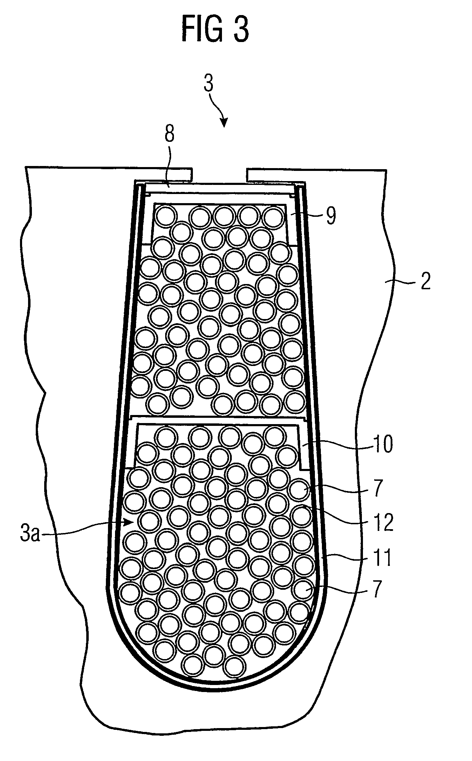

Fig. 1 zeigt einen Ständer 1 eines Elektromotors für einen Bahnantrieb mit Blick auf die vordere Stirnseite. Der Ständer 1 ist in üblicher Weise als Blechpaket 2 in Form eines Hohlzylinders ausgebildet, der innen mit äquidistant beabstandeten in Richtung der Längsachse verlaufenden Nuten 3 versehen ist. In den Nuten ist eine Wicklung 3a (s. auch Fig. 3) angeordnet, deren Wickelköpfe 4 stirnseitig aus dem Blechpaket 2 herausragen. Der Wickelkopf 4 ist zum Schutz gegen äußere Einflüsse in ein temperaturbeständiges elastisches Material 4a in Form von Silikonkautschuk eingebettet. Fig. 1 zeigt weiter die Anschlussleitungen 4b der Wicklung 3a, die ebenfalls in Silikonkautschuk eingebettet sind. Weiter zeigt Fig. 1 Schrauben 5, mit deren Hilfe das Blechpaket verspannt wird. Außerdem zeigt die Stirnseite des Blechpakets die Eintrittsöffnungen von Kühlbohrungen 6, welche von Kühlluft durchströmbar sind.

Bei der Montage des Elektromotors wird ein nicht gezeigter Läufer im Ständer angeordnet, der im Motorgehäuse drehgelagert ist. Speziell kann das Blechpaket 2 des Ständers 1 über Stege mit dem Motorgehäuse verbunden sein, so dass Kühlluft zwischen dem Motorgehäuse und dem Ständer 1 hindurchströmen kann.

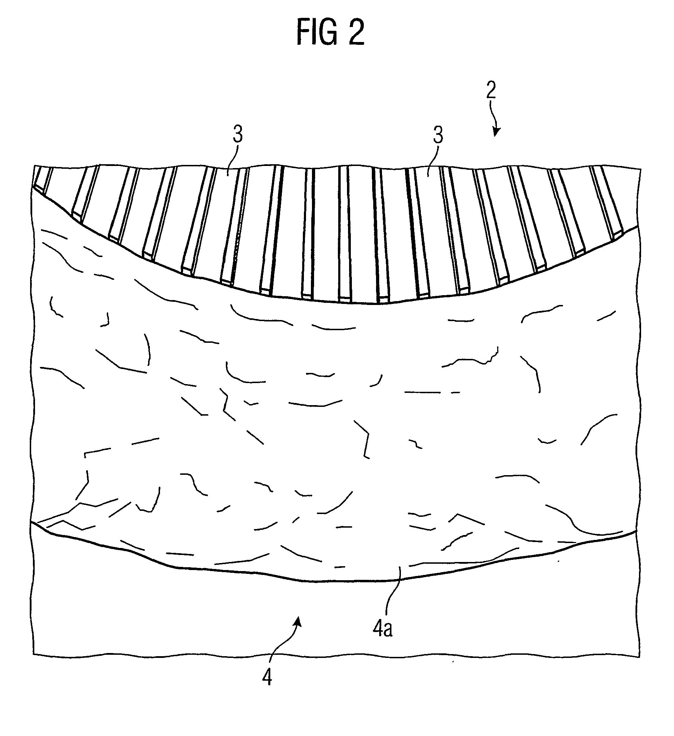

Fig. 2 zeigt einen Ausschnitt der in Silikonkautschuk eingebetteten Wickelköpfe in einer vergrößerten Darstellung. Dabei sind am oberen Rand der Figur die Nuten 3 zu erkennen. Wie Fig. 2 zeigt, ist der Wickelkopf vollständig von Silikonkautschuk umgeben, der beispielsweise durch Träufeln aufgetragen wurde.

Fig. 3 zeigt einen Querschnitt durch eine Nut 3 mit eingelegter Wicklung 3a, die hier aus Runddrähten 7 gebildet ist. Die in das Blechpaket 2 eingearbeitete Nut 3 ist oben mit einem Nutverschlussstreifen 8 versehen, unter der sich ein Deckschieber 9 als unmittelbare Abdeckung der Runddrähte befindet. Etwa auf halber Tiefe der Nut 3 ist weiter ein Zwischenschieber 10 vorhanden, durch welchen bei der hier realisierten Zweischichtwicklung die Ober- und die Unterschicht der Wicklung voneinander getrennt werden. Darüber hinaus ist die Nut 3 innen mit einer Nutseitenisolierung 11 versehen. Diese weist zur Erzielung der hohen Temperaturbeständigkeit und Wärmeleitfähigkeit einen glimmerhaltigen Werkstoff auf.

Die Runddrähte 7 der Wicklung sind ebenfalls mit einer Isolierung 12 versehen, die aus einem Hochtemperaturthermoplaste bestehen kann, welches auf die Runddrähte aufextrudiert ist. Zum Stand der Technik gehört es, die Isolierung aus einer oder mehreren Lagen Polyimidfolie herzustellen.

Der Elektromotor des Bahnantriebs wird so verwendet, dass der Läufer und der Ständer bei fahrendem Fahrzeug, d. h. in der Regel bei angetriebenen Fahrzeug von Kühlluft durchströmt wird. Diese strömt auch durch die Kühlbohrungen 6 sowie bei Befestigung des Ständers 1 mittels Stegen am Motorgehäuse durch den so zwischen Motorgehäuse und Ständer 2 gebildeten Spalt.

Auf diese Weise wird erreicht, dass der Elektromotor und damit der Antrieb den zulässigen Betriebsbedingungen der Wärmeklasse 200 genügt.

## Patentansprüche

1. Elektromotor für einen Antrieb eines Fahrzeugs, mit einem Läufer sowie einem aus einem Blechpaket (2) gebildeten Ständer (1), der mit Nuten (3) versehen ist, in denen mindestens eine Wicklung (3a) angeordnet ist, wobei der Elektromotor von Kühlluft durchströmt wird, wobei die Wicklung (3a) aus mit einer Isolierung (12) versehenen Runddrähten (7) gebildet ist und die Wickelköpfe (4) zum Schutz gegen äußere Einflüsse in ein temperaturbeständiges elastisches Material (4a) eingebettet sind, so dass der Elektromotor zumindest den Anforderungen der Wärmeklasse 200 genügt, indem er mit einer Temperaturdifferenz von 200 K gegenüber der umgebenden Luft betrieben werden kann und wobei die Nuten (3) eine Nutseitenisolierung (11) aus einem glimmerhaltigen Werkstoff aufweisen und wobei die Isolierung (12) der Runddrähte (7) aus einem oder mehreren aufextrudierten Hochtemperaturthermoplaste besteht und wobei die Kühlluft im Ständer (1) vorgesehene Kühlbohrungen (6) durchströmt.

2. Elektromotor nach Anspruch 1, **dadurch gekennzeichnet, dass** das temperaturbeständige elastische Material (4a) ein Silikonkautschuk ist.

3. Elektromotor nach Anspruch 2, **dadurch gekennzeichnet, dass** die Kühlluft die vom Material (4a) geschützten Wickelköpfe (4) umströmt.

4. Elektromotor nach einem der Ansprüche 1 bis **3, dadurch gekennzeichnet, dass** die Kühlluft den Elektromotor zwischen dem Motorgehäuse und dem Ständer (1) durchströmt, wobei Motorgehäuse und Ständer (1) über Stege miteinander verbunden sind.

5. Antrieb, insbesondere für Fahrzeuge, mit einem Elektromotor nach einem der vorhergehenden Ansprüche.

## Claims

1. Electric motor for a drive of a vehicle, having a rotor and having a stator (1) which is formed from a laminated core (2) and is provided with grooves (3) in which at least one winding (3a) is arranged, cooling air flowing through the electric motor, wherein the winding (3a) is formed from round wires (7) which are provided with an insulation (12), and the winding heads (4) are embedded in a temperature-resistant elastic material (4a) in order to protect them against external influences, with the result that the electric motor satisfies at least the requirements of thermal class 200 by virtue of the fact that it can be operated with a temperature difference of 200 K compared to the surrounding air, and wherein the grooves (3) have groove-side insulation (11) formed from a mica-containing material, and wherein the insulation (12) of the round wires (7) is composed of one or more extruded-on high-temperature thermoplasts, and wherein the cooling air flows through cooling bores (6) which are provided in the stator (1).

2. Electric motor according to Claim 1, **characterized in that** the temperature-resistant elastic material (4a) is a silicone rubber.

3. Electric motor according to Claim 2, **characterized in that** the cooling air flows around the winding heads (4) which are protected by the material (4a).

4. Electric motor according to one of Claims 1 to 3, **characterized in that** the cooling air flows through the electric motor between the motor housing and the stator (1), motor housing and stator (1) being connected to one another by means of webs.

5. Drive, in particular for vehicles, having an electric motor according to one of the preceding claims.

## Revendications

1. Moteur électrique pour un entraînement de véhicule, comprenant un rotor ainsi qu'un stator (1) formé d'un paquet (2) de tôle et muni d'encoches (3) dans lesquelles est disposé au moins un enroulement (3a), de l'air de refroidissement passant dans le moteur électrique, dans lequel l'enroulement (3a) est formé de fils (7) de section circulaire munis d'un isolant (12) et les têtes (4) de bobine sont pour se protéger des influences extérieures incorporées dans un matériau (4a) élastique qui résiste à la température, de sorte que le moteur électrique satisfait au moins aux exigences de la classe thermique 200 en pouvant fonctionner avec une différence de température de 200 K par rapport à l'air ambiant, et dans lequel les encoches (3) ont un isolant (11) latéral d'encoche en un matériau contenant du mica et dans lequel l'isolant (12) des fils (7) de section circulaire est en une ou plusieurs matières thermoplastiques extrudées qui résistent à une haute température et dans lequel l'air de refroidissement passe dans des ouies (6) de refroidissement prévues dans le stator (1).

2. Moteur électrique suivant la revendication 1, **caractérisé en ce que** le matériau (4) élastique qui résiste à la température est un caoutchouc de silicone.

3. Moteur électrique suivant la revendication 2, **caractérisé en ce que** l'air de refroidissement lèche les têtes (4) de bobine protégées par le matériau (4a).

4. Moteur électrique suivant l'une des revendications 1 à 3, **caractérisé en ce que** l'air de refroidissement passe dans le moteur électrique entre le carter du moteur et le stator (1), le carter du moteur et le stator (1) étant assemblés entre eux par des entretoises.

5. Entraînement, notamment de véhicule, ayant un moteur électrique suivant l'une des revendications précédentes.
